# EUROPEAN PATENT SPECIFICATION

(11) **EP 3 838 614 B1**
(45) Date of publication and mention of the grant of the patent: **08.03.2023**
(21) Application number: 19217534.7
(22) Date of filing: 18.12.2019
(51) Int. Cl.: F16D 3/18, B60B 9/04, F16D 3/66

(54) **RESILIENT WHEEL AND BOGIE COMPRISING SUCH A WHEEL**
GUMMIGEFEDERTES RAD UND DREHGESTELL MIT EINEM SOLCHEN RAD
ROUE ÉLASTIQUE ET BOGIE COMPRENANT UNE TELLE ROUE

(43) Date of publication of application: 23.06.2021
(73) Proprietor: Olofsfors AB, 914 91 Nordmaling (SE)
(72) Inventor: Volungholen, Rolf, 821 34 Bollnäs (SE)
(74) Representative: Bjerkén Hynell KB

(56) References cited:
- CN-A- 102 537 276
- GB-A- 188 154
- US-A- 979 269
- US-A- 1 192 731

## Description

### FIELD OF THE INVENTION AND PRIOR ART

The present invention relates to a resilient wheel according to the preamble of claim 1. The invention also relates to a bogie for a vehicle comprising a drive wheel, an idler wheel and a track belt arranged in an endless loop around the drive wheel and the idler wheel.

Resilient wheels are known in several different designs and may for instance be used as vehicle wheels or as feed wheels for longitudinal feeding of elongated objects, such as tree trunks. Resilient vehicle wheels may for instance be mounted to forest vehicles, such as harvesters or forwarders, and resilient feed wheels may for instance be used in harvester heads for tree harvesting where the feed wheels are arranged to feed a fallen tree trunk through a branching device for branching of the tree trunk and up to a cutting device for cross-cutting of the tree trunk into individual logs.

Different types of resilient wheels are for instance disclosed in GB 103397 A, US 979269 A and SE 533772 C2.

### OBJECT OF THE INVENTION

The object of the present invention is to provide a resilient wheel having a new and favourable design.

### SUMMARY OF THE INVENTION

According to the invention, said object is achieved by means of a resilient wheel having the features defined in claim 1.

The resilient wheel according to the invention comprises:
- an inner wheel part, wherein a wheel-centre is provided at the centre of the inner wheel part;
- an annular outer wheel part, which surrounds the inner wheel part;
- one or more elongated spring elements arranged in an annular space between the inner wheel part and the outer wheel part, wherein the outer wheel part is resiliently connected to the inner wheel part through the spring element or elements; and
- first and second lateral walls arranged opposite to each other and fixed to the inner or outer wheel part, wherein said annular space is limited in a first axial direction by the first lateral wall and in the opposite axial direction by the second lateral wall, and wherein the first and second lateral walls are configured to keep each spring element in place in said annular space in axial direction.

Said annular space is limited in radial direction outwards by an inwardly facing annular edge on the outer wheel part and in radial direction inwards by an outwardly facing annular edge on the inner wheel part, wherein each spring element is fitted between this annular edge on the outer wheel part and this annular edge on the inner wheel part. Furthermore, said first and second lateral walls are provided with projecting teeth, which project from the associated wheel part in radial direction towards the other wheel part and are received with play in associated recesses in the other wheel part, wherein the projecting teeth are configured to overlap lateral surfaces on opposite sides of the other wheel part to thereby keep the outer wheel part in place in relation to the inner wheel part in axial direction.

The above-mentioned lateral walls of the resilient wheel keep the spring elements in place between said annular edge on the outer wheel part and said annular edge on the inner wheel part, and they also keep the outer and inner wheel parts properly positioned in relation to each other in the axial direction of the wheel. Furthermore, the projecting teeth of the lateral walls are, in co-operation with the associated recesses, configured to restrict the mutual movability between the inner and outer wheel parts in the circumferential direction of the wheel so as to thereby make possible an efficient transmission of torque between the inner and outer wheel parts. The resilient wheel according to the present invention has a rather simple construction and can be manufactured in a simple and cost-efficient manner with a comparatively small amount of material. A wheel of this type may be manufactured entirely of steel in an environment friendly manner. The spring elements can be designed to give the wheel appropriate inherent resiliency and thereby make it possible to dispense with a pneumatic tyre, which in its turn eliminates the risk for punctures.

According to an embodiment of the invention, the outer wheel part comprises a wheel rim formed by several curved wheel rim segments, which are arranged one after the other along the outer periphery of the outer wheel part, wherein each wheel rim segment has an inwardly facing mounting portion which is received between and fixed to the first and second lateral walls. It is easier to manufacture shorter wheel rim segments of high quality as compared to a complete wheel rim in one piece. Thus, by having the wheel rim divided into separate segments which are individually mounted to the first and second lateral walls, the achievement of a high-quality wheel rim is facilitated. Furthermore, a damaged wheel rim segment may easily be exchanged for a new wheel rim segment without having to exchange the entire wheel rim.

According to another embodiment of the invention, the mounting portion of each wheel rim segment has a curved edge on its inwardly facing side, wherein these curved edges on the mounting portions of the wheel rim segments together form said annular edge on the outer wheel part. The outer wheel part may hereby be given a simple construction, which makes it possible to manufacture the outer wheel part in a simple and cost-efficient manner.

According to another embodiment of the invention, the inner wheel part comprises a base element in the form of a flat circular ring or circular disc, wherein the wheel-centre is provided at the centre of this base element and said annular edge on the inner wheel part extends along the outer periphery of the base element. The inner wheel part may hereby be given a simple construction, which makes it possible to manufacture the inner wheel part in a simple and cost-efficient manner.

Another embodiment of the invention is characterized in:
- that a first flat ring is fixed to the base element on a first side thereof, wherein this first flat ring is provided with teeth distributed along the outer periphery thereof and wherein the recesses for receiving the projecting teeth of the first lateral wall are formed between these teeth on the first flat ring; and
- that a second flat ring is fixed to the base element on an opposite second side thereof, wherein this second flat ring is provided with teeth distributed along the outer periphery thereof and wherein the recesses for receiving the projecting teeth of the second lateral wall are formed between these teeth on the second flat ring.

The above-mentioned recesses may hereby be achieved in the inner wheel part in a simple manner.

According to another embodiment of the invention, the spring elements are rod-shaped and arranged after each other in the circumferential direction of the annular space so as to form a broken polygonal ring of spring elements around said annular edge on the inner wheel part. This design and arrangement of the spring elements contribute to the achievement of a well functioning resilient wheel with a simple construction, which can be manufactured and assembled in a simple and cost-efficient manner.

According to another embodiment of the invention, outwardly projecting engagement members in the form of teeth are distributed along the outer periphery of the outer wheel part. These engagement members will give an excellent grip between the resilient wheel and an associated track belt.

Further advantageous features of the resilient wheel according to the present invention will appear from the description following below and the dependent claims.

The invention also relates to a bogie having the features defined in claim 15.

Further advantageous features of the bogie according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a lateral view of a resilient wheel according to an embodiment of the present invention,
- Fig 2: is a cut according to the line II-II in Fig 1,
- Fig 3: is a cut perspective view of a part of the wheel of Fig 1,
- Fig 4: is a lateral view of the wheel of Fig 1, as seen with a lateral wall of the wheel removed,
- Fig 5: is a cut perspective view of a part of the wheel of Fig 1, as seen with a lateral wall of the wheel removed,
- Fig 6: is a lateral view of the wheel of Fig 1, as seen with the wheel in a highly loaded state,
- Fig 7: is a lateral view corresponding to Fig 6, but with a lateral wall of the wheel removed,
- Fig 8: is a perspective view of a resilient wheel according to another embodiment of the invention,
- Fig 9: is a perspective view of a bogie according to an embodiment of the present invention, and
- Fig 10: is a perspective view of the bogie of Fig 9, as seen from another direction.

### DETAILED DESCRIPTION OF EMBODIMENTS OF THE INVENTION

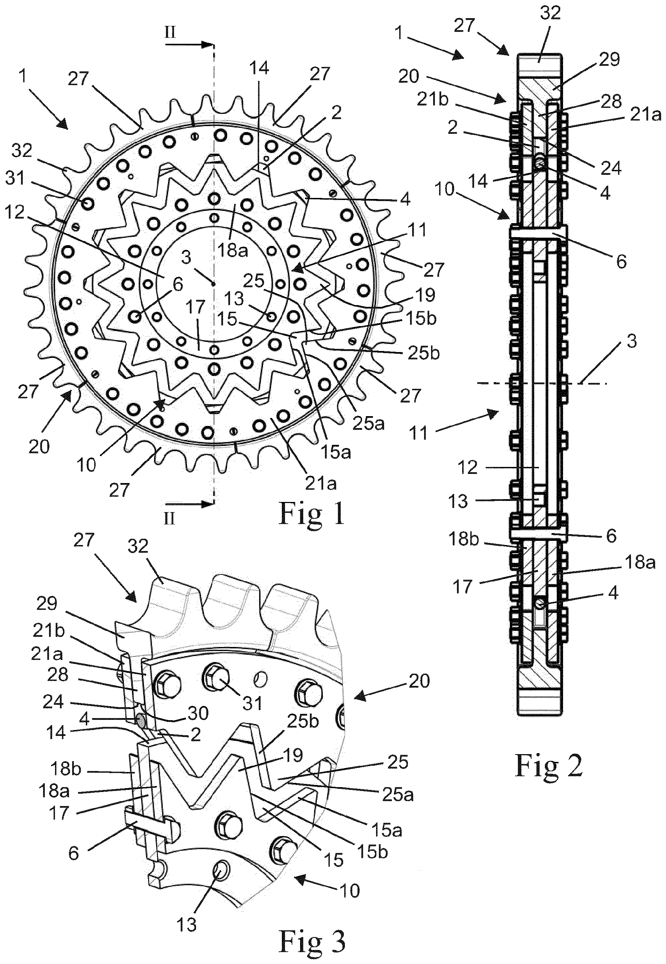

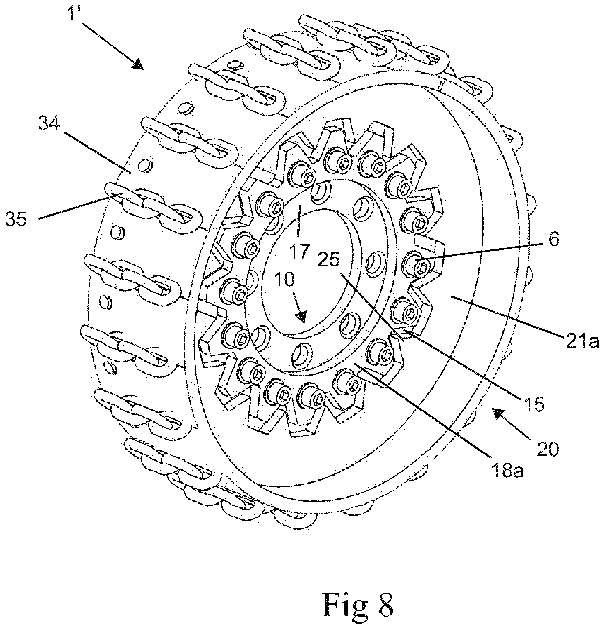

A resilient wheel 1 according to an embodiment of the present invention is illustrated in Figs 1-7 and resilient wheels 1', 1" according to two other embodiments of the invention are illustrated in Figs 8-10. The resilient wheel 1, 1', 1" of the invention comprises an inner wheel part 10 and an annular outer wheel part 20 surrounding the inner wheel part. A wheel-centre 11 is provided at a central portion of the inner wheel part 10. In the illustrated embodiments, the inner wheel part 10 is annular, wherein the wheel-centre 11 comprises an axial centre bore 12 and several bolt holes 13 distributed about the centre bore. The centre bore 12 is adapted to receive a shaft of a wheel hub assembly and the bolt holes 13 are adapted to receive wheel bolts of a wheel hub assembly. The inner wheel part 10 may as an alternative be disc-shaped, wherein the wheel-centre is closed and consequently lacks a centre bore.

An annular space 2 is provided between the inner wheel part 10 and the outer wheel part 20, wherein this annular space 2 is limited in radial direction outwards by an inwardly facing annular edge 24 on the outer wheel part 20 and in radial direction inwards by an outwardly facing annular edge 14 on the inner wheel part 10. The annular space 2 is limited in a first axial direction by a first lateral wall 21a and in the opposite axial direction by a second lateral wall 21b arranged opposite to the first lateral wall 21a.

In the illustrated embodiments, the lateral walls 21a, 21b are fixed to the outer wheel part 20 and provided with projecting teeth 25 which project radially inwards from the outer wheel part 20 towards the inner wheel part 10 and are received with play in associated recesses 15 in the inner wheel part 10, wherein the projecting teeth 25 are configured to overlap lateral surfaces on opposite sides of the inner wheel part 10 to thereby keep the outer wheel part 20 in place in relation to the inner wheel part 10 in axial direction. In this case, the lateral walls 21a, 21b extend radially inwards beyond the above-mentioned annular edge 24 on the outer wheel part 20.

The lateral walls 21a, 21b may as an alternative be fixed to the inner wheel part 10 and provided with projecting teeth which project radially outwards from the inner wheel part 10 towards the outer wheel part 20 and are received with play in associated recesses in the outer wheel part 20, wherein the projecting teeth are configured to overlap lateral surfaces on opposite sides of the outer wheel part 20 to thereby keep the outer wheel part 20 in place in relation to the inner wheel part 10 in axial direction. In this case, the lateral walls 21a, 21b extend radially outwards beyond the above-mentioned annular edge 14 on the inner wheel part 10.

The first and second lateral walls 21a, 21b preferably have the form of toothed flat rings, wherein the projecting teeth 25 are distributed along the inner periphery of the first and second lateral walls 21a, 21b when these walls are fixed to the outer wheel part 20 and along the outer periphery of the first and second lateral walls 21a, 21b when these walls are fixed to the inner wheel part 10.

Each tooth 25 of the lateral walls 21a, 21b has an inclined first edge 25a on a first side of the tooth and an inclined second edge 25b the opposite side of the tooth, wherein these inclined edges 25a, 25b converge towards the tip of the tooth. In the illustrated embodiments, each recess 15 associated with a tooth 25 has an inclined first edge 15a on a first side of the recess and an inclined second edge 15b on the opposite side of the recess, wherein these inclined edges 15a, 15b converge towards the bottom of the recess and have the same or essentially the same angle of inclination as the opposite edges 25a, 25b of the associated tooth.

When the inner wheel part 10 is rotated in a first rotary direction, the first edge 15a of a recess 15 is configured to come into contact with the opposite edge 25a of the associated tooth 25 and thereby prevent further rotation of the inner wheel part 10 in relation to the outer wheel part 20 and allow transmission of torque between the inner and outer wheel parts through these mutually contacting edges 15a, 25a. When the inner wheel part 10 is rotated in an opposite second rotary direction, the second edge 15b of a recess 15 is configured to come into contact with the opposite edge 25b of the associated tooth 25 and thereby prevent further rotation of the inner wheel part 10 in relation to the outer wheel part 20 and allow transmission of torque between the inner and outer wheel parts through these mutually contacting edges 15b, 25b.

In the illustrated embodiments, the projecting teeth 25 and the associated recesses 15 are V-shaped as seen in a plane perpendicular to the centre axis 3 of the wheel 1, 1', 1".

One or more elongated spring elements 4 are arranged in the above-mentioned annular space 2 between the inner and outer wheel parts 10, 20, wherein the outer wheel part 20 is resiliently connected to the inner wheel part 10 through these spring elements 4. The spring elements 4 are configured to allow limited resilient movements in radial direction between the inner and outer wheel parts 10, 20. Each spring element 4 is fitted between the above-mentioned annular edge 24 on the outer wheel part 20 and the above-mentioned annular edge 14 on the inner wheel part 10 and kept in place in the annular space 2 in axial direction by the first and second lateral walls 21a, 21b.

The spring elements 4 are made of spring steel and they are preferably rod-shaped and arranged after each other in the circumferential direction of the annular space 2 so as to form a broken polygonal ring of spring elements around said annular edge 14 on the inner wheel part 10. In the embodiment illustrated in Figs 1-7, each side of said polygonal ring of spring elements is formed by a separate spring element 4. However, it would also be possible to use longer spring elements which are bent in order to form two or more sides of said polygonal ring of spring elements. Stop members 5 are with advantage arranged at the opposite ends of each spring element 4, wherein these stop members 5 are fixed to the outer wheel part 20 in order to prevent the spring elements 4 from sliding in the circumferential direction of the annular space 2 and thereby keep the spring elements 4 properly positioned in relation to each other. An end surface at a first end of each spring element 4 abuts against a first stop member 5 and an end surface at the other end of each spring element abuts against another stop member 5.

In the embodiment illustrated in Figs 1-7, there are six spring elements 4 arranged one after the other in the annular space 2. Thus, in this case the spring elements 4 are configured to form a hexagonal ring of spring elements. However, the number of spring elements 4 and the number of sides of the broken polygonal ring of spring elements formed by the spring elements may vary in dependence on the diameter of the above-mentioned annular edges 14, 24.

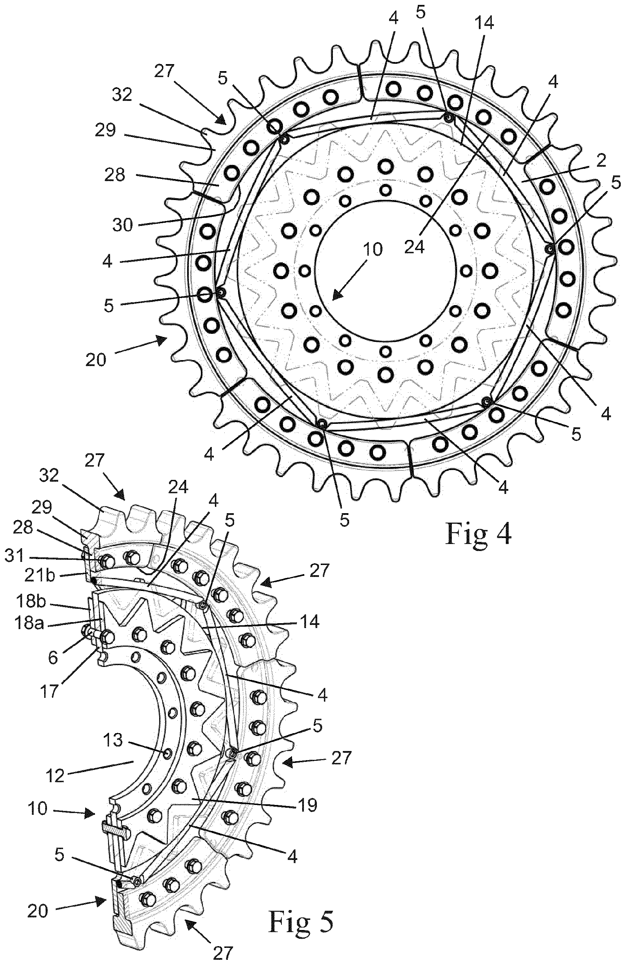

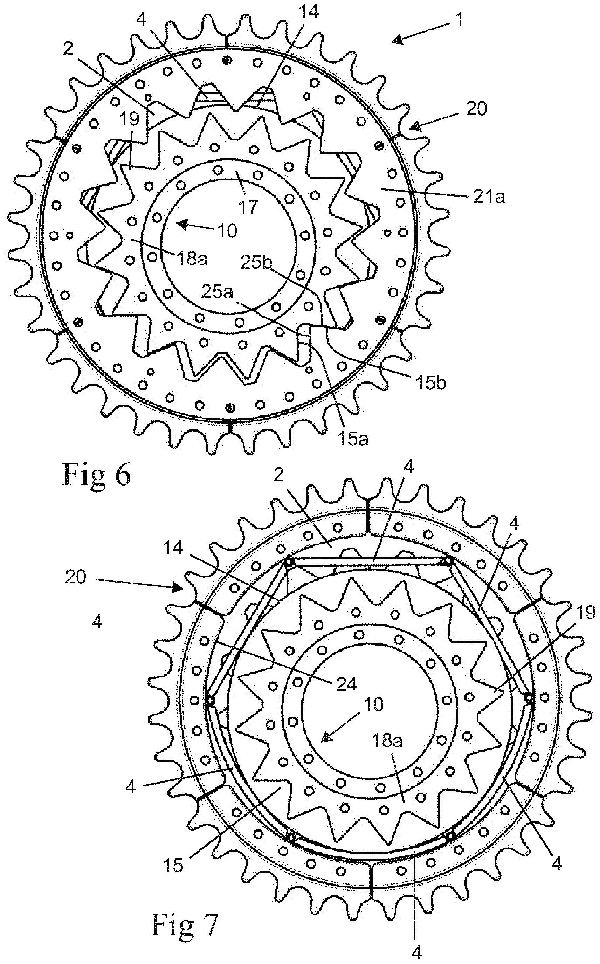

In Figs 1 and 4 the resilient wheel 1 is shown in a non-loaded resting state. In this state, the spring elements 4 keep the inner wheel part 10 centred in relation to the outer wheel part 20. In Figs 6 and 7 the resilient wheel 1 is shown in a loaded operating state, in which the inner and outer wheel parts 10, 20 have been moved towards each other in radial direction against the action of a spring force from one or more of the spring elements 4 and in which one of the edges 25a, 25b of at least one of the projecting teeth 25 on the first and second lateral walls 21a, 21b abuts against the opposite edge 15a, 15b of the associated recess 15 in the inner wheel part 10. When the load and the torque on the wheel 1 are relieved, the inner and outer wheel parts 10, 20 will return to the resting state illustrated in Figs 1 and 4 under the effect of the spring force from the spring elements 4.

In the embodiments illustrated in Figs 1-7, 9 and 10, the outer wheel part 20 comprises a wheel rim formed by several curved wheel rim segments 27, which are arranged one after the other along the outer periphery of the outer wheel part 20 in order to form an annular wheel rim. Each wheel rim segment 27 has an inwardly facing mounting portion 28, which is received between and fixed to the first and second lateral walls 21a, 21b, and an outwardly facing wheel rim portion 29, which is located outside the outer periphery of the first and second lateral walls 21a, 21b. The mounting portion 28 of each wheel rim segment 27 has a curved edge 30 on its inwardly facing side, wherein these curved edges 30 on the mounting portions 28 of the wheel rim segments 27 together form the above-mentioned annular edge 24 on the outer wheel part 20. In the illustrated example, the mounting portions 28 of the wheel rim segments 27 are bolted to the first and second lateral walls 21a, 21b by means of bolts 31 distributed along each mounting portion 28, wherein each bolt 31 extends through a bolt hole in the mounting portion 28 of one of the wheel rim segments 27 and through corresponding bolt holes in the first and second lateral walls 21a, 21b. The mounting portions 28 of the wheel rim segments 27 may as an alternative be fixed to the first and second lateral walls 21a, 21b in any other suitable manner.

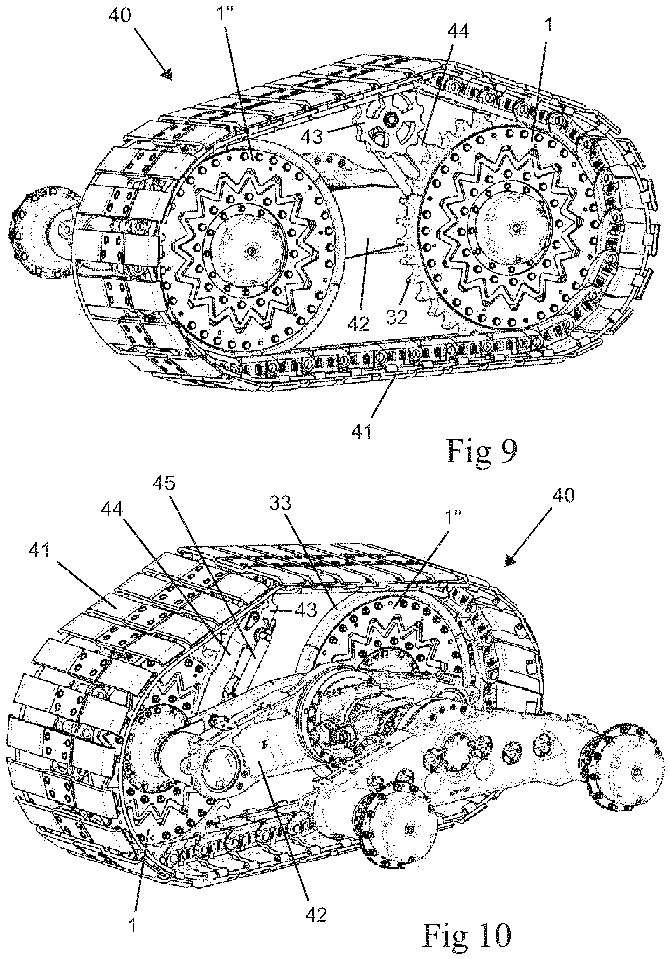

In the embodiment illustrated in Figs 1-7, the outwardly facing wheel rim portion 29 of each wheel rim segment 27 is provided with outwardly projecting engagement members 32 in the form of teeth distributed along the outer edge of the wheel rim segment. Thus, these outwardly projecting engagement members 32 are distributed around the wheel 1 along the outer periphery of the outer wheel part 20. The outwardly facing wheel rim portion 29 of each wheel rim segment 27 may as an alternative have a smooth outer surface 33, as illustrated in Fig 10. Thus, in the latter case the outer wheel part 20 has a smooth outer periphery.

In the embodiment illustrated in Fig 8, the outer wheel part 20 of the resilient wheel 1' comprises a cylindrical mantle 34, which is fixedly connected to the first and second lateral walls 21a, 21b. The wheel 1' according to Fig 8 is intended for longitudinal feeding of elongated objects, such as tree trunks, and it may for instance be used as a feed wheel in a harvester head for tree harvesting. The mantle 34 is on its outside provided with several gripping members 35 for gripping an object fed by means of the wheel 1'. In the illustrated example, the gripping members 35 have the form of chain sections, but any other suitable type of gripping members could also be used.

In the illustrated embodiments, the inner wheel part 10 comprises a base element 17 in the form of a flat ring, wherein the wheel-centre 11 is provided at the centre of this base element 17. The above-mentioned annular edge 14 on the inner wheel part 10 extends along the outer periphery of the base element 17. If the resilient wheel has a closed wheel-centre without centre bore 12, the inner wheel part 10 may comprise a base element in the form of a circular disc. A first flat ring 18a and a second flat ring 18b are fixed to the base element 17 on opposite sides thereof. The first and second flat rings 18a, 18b are provided with teeth 19 distributed along the outer periphery thereof, wherein the recesses 15 for receiving the projecting teeth 25 of the first lateral wall 21a are formed between the teeth 19 on the first flat ring 18a and the recesses 15 for receiving the projecting teeth 25 of the second lateral wall 21b are formed between the teeth 19 on the second flat ring 18b. In the illustrated example, the first and second flat rings 18a, 18b are bolted to the base element 17 by means of bolts 6 distributed in the circumferential direction of the first and second flat rings 18a, 18b, wherein each bolt 6 extends through a bolt hole in the base element 17 and through corresponding bolt holes in the first and second flat rings 18a, 18b. The first and second flat rings 18a, 18b may as an alternative be fixed to the base element 17 by welding or in any other suitable manner.

The inner and outer wheel parts 10, 20 are preferably made of steel.

The resilient wheel 1 illustrated in Figs 1-7 may for instance be used as a rotatable drive wheel in a bogie 40 for a vehicle, as illustrated in Figs 9 and 10. In this case, the outwardly projecting engagement members 32 on the outer periphery of the outer wheel part 20 are in driving engagement with a track belt 41, which is arranged in an endless loop around the drive wheel 1 and an associated idler wheel 1". In the illustrated example, the idler wheel 1" is a resilient wheel according to the present invention with a smooth outer periphery. The inner wheel parts 10 of the wheels 1, 1" are rotatably mounted to a pivotally arranged holder 42 of the bogie. The drive wheel 1 is rotatable under the effect of a drive engine (not shown), for instance in the form of a combustion engine or an electric motor, wherein driving torque may be transmitted from the drive engine to the drive wheel 1 through a suitable transmission in the holder 42. The illustrated bogie 40 also comprises a tensioning wheel 43 which is rotatably mounted at the end of a pivot arm 44, which in its turn is pivotally mounted to the holder 42 so as to be pivotable in relation to the holder about a pivot axis by means of a hydraulic cylinder 45. By pivoting of the pivot arm 44 in relation to the holder 42, the tensioning wheel 43 can be pressed upwards against the inner side of the track belt 41 in order to adjust the track belt tension.

The invention is of course not in any way restricted to the embodiments described above. On the contrary, many possibilities to modifications thereof will be apparent to a person with ordinary skill in the art without departing from the scope of the invention such as defined in the appended claims.

## Claims

1. A resilient wheel comprising:
- an inner wheel part (10), wherein a wheel-centre (11) is provided at the centre of the inner wheel part (10);
- an annular outer wheel part (20), which surrounds the inner wheel part (10); and
- one or more elongated spring elements (4) arranged in an annular space (2) between the inner wheel part (10) and the outer wheel part (20), wherein the outer wheel part (20) is resiliently connected to the inner wheel part (10) through the spring element or elements (4); and
- first and second lateral walls (21a, 21b) arranged opposite to each other and fixed to the inner or outer wheel part, wherein said annular space (2) is limited in a first axial direction by the first lateral wall (21a) and in the opposite axial direction by the second lateral wall (21b), and wherein the first and second lateral walls (21a, 21b) are configured to keep each spring element (4) in place in said annular space (2) in axial direction,
**characterized in:**
- **that** said annular space (2) is limited in radial direction outwards by an inwardly facing annular edge (24) on the outer wheel part (20) and in radial direction inwards by an outwardly facing annular edge (14) on the inner wheel part (10), wherein each spring element (4) is fitted between this annular edge (24) on the outer wheel part (20) and this annular edge (14) on the inner wheel part (10); and
- **that** the first and second lateral walls (21a, 21b) are provided with projecting teeth (25), which project from the associated wheel part (20) in radial direction towards the other wheel part (10) and are received with play in associated recesses (15) in the other wheel part (10), wherein the projecting teeth (25) are configured to overlap lateral surfaces on opposite sides of the other wheel part (10) to thereby keep the outer wheel part (20) in place in relation to the inner wheel part (10) in axial direction.

2. A resilient wheel according to claim 1, **characterized in that** said teeth (25) are V-shaped as seen in a plane perpendicular to the centre axis (3) of the wheel (1, 1', 1").

3. A resilient wheel according to claim 2, **characterized in that** said recesses (15) are V-shaped as seen in a plane perpendicular to the centre axis (3) of the wheel (1, 1', 1").

4. A resilient wheel according to claim 2 or 3, **characterized in that** the first and second lateral walls (21a, 21b) have the form of toothed flat rings.

5. A resilient wheel according to any of claims 1-4, **characterized in that** the first and second lateral walls (21a, 21b) are fixed to the outer wheel part (20), wherein said projecting teeth (25) are distributed along the inner periphery of the first and second lateral walls (21a, 21b) and project in radial direction inwards.

6. A resilient wheel according to claim 5, **characterized in that** the outer wheel part (20) comprises a wheel rim formed by several curved wheel rim segments (27), which are arranged one after the other along the outer periphery of the outer wheel part, wherein each wheel rim segment (27) has an inwardly facing mounting portion (28) which is received between and fixed to the first and second lateral walls (21a, 21b).

7. A resilient wheel according to claim 6, **characterized in that** the mounting portion (28) of each wheel rim segment (27) has a curved edge (30) on its inwardly facing side, wherein these curved edges (30) on the mounting portions (28) of the wheel rim segments (27) together form said annular edge (24) on the outer wheel part (20).

8. A resilient wheel according to claim 6 or 7, **characterized in that** the mounting portion (28) of each wheel rim segment (27) is fixed to the first and second lateral walls (21a, 21b) by means of bolts (31).

9. A resilient wheel according to any of claims 1-8, **characterized in that** the inner wheel part (10) is annular or disc-shaped.

10. A resilient wheel according to claim 9, **characterized in that** the inner wheel part (10) comprises a base element (17) in the form of a flat circular ring or circular disc, wherein the wheel-centre (11) is provided at the centre of this base element (17) and said annular edge (14) on the inner wheel part (10) extends along the outer periphery of the base element (17).

11. A resilient wheel according to claim 10 in combination with claim 5, **characterized in:**
- **that** a first flat ring (18a) is fixed to the base element (17) on a first side thereof, wherein this first flat ring (18a) is provided with teeth (19) distributed along the outer periphery thereof and wherein the recesses (15) for receiving the projecting teeth (25) of the first lateral wall (21a) are formed between these teeth (19) on the first flat ring (18a); and
- **that** a second flat ring (18b) is fixed to the base element (17) on an opposite second side thereof, wherein this second flat ring (18b) is provided with teeth (19) distributed along the outer periphery thereof and wherein the recesses (15) for receiving the projecting teeth (25) of the second lateral wall (21b) are formed between these teeth (19) on the second flat ring (18b)

12. A resilient wheel according to any of claims 1-11, **characterized in that** the spring elements (4) are rod-shaped and arranged after each other in the circumferential direction of the annular space (2) so as to form a broken polygonal ring of spring elements around said annular edge (14) on the inner wheel part (10).

13. A resilient wheel according to any of claims 1-12, **characterized in that** outwardly projecting engagement members (32) in the form of teeth are distributed along the outer periphery of the outer wheel part (20).

14. A resilient wheel according to any of claims 1-12, **characterized in that** the outer wheel part (20) has a smooth outer periphery.

15. A bogie for a vehicle, wherein the bogie (40) comprises a rotatable drive wheel (1), a rotatable idler wheel (1") and a track belt (41) arranged in an endless loop around the drive wheel (1) and the idler wheel (1"), **characterized in that** the drive wheel (1) is a wheel according to claim 13 and that the idler wheel (1") is a wheel according to claim 14.

## Patentansprüche

1. Elastisches Rad, umfassend:
- ein inneres Radteil (10), wobei in der Mitte des inneren Radteils (10) ein Radkörper (11) vorgesehen ist;
- ein ringförmiges äußeres Radteil (20), das das innere Radteil (10) umgibt; und
- ein oder mehrere längliche Federelemente (4), die in einem ringförmigen Raum (2) zwischen dem inneren Radteil (10) und dem äußeren Radteil (20) angeordnet sind, wobei das äußere Radteil (20) über das oder die Federelemente (4) elastisch mit dem inneren Radteil (10) verbunden ist; und
- erste und zweite Seitenwände (21a, 21b), die einander gegenüberliegend angeordnet und an dem inneren oder äußeren Radteil befestigt sind, wobei der ringförmige Raum (2) in einer ersten axialen Richtung durch die erste Seitenwand (21a) und in der entgegengesetzten axialen Richtung durch die zweite Seitenwand (21b) begrenzt ist, und wobei die erste und die zweite Seitenwand (21a, 21b) so konfiguriert sind, dass sie jedes Federelement (4) in dem ringförmigen Raum (2) in axialer Richtung an seinem Platz halten,
**dadurch gekennzeichnet:**
- **dass** der ringförmige Raum (2) in radialer Richtung nach außen durch einen nach innen weisenden ringförmigen Rand (24) an dem äußeren Radteil (20) und in radialer Richtung nach innen durch einen nach außen weisenden ringförmigen Rand (14) an dem inneren Radteil (10) begrenzt ist, wobei jedes Federelement (4) zwischen diesem ringförmigen Rand (24) an dem äußeren Radteil (20) und diesem ringförmigen Rand (14) an dem inneren Radteil (10) angebracht ist; und
- **dass** die erste und zweite Seitenwand (21a, 21b) mit vorstehenden Zähnen (25) versehen sind, die von dem zugehörigen Radteil (20) in radialer Richtung zu dem anderen Radteil (10) hin vorstehen und in zugehörigen Ausnehmungen (15) in dem anderen Radteil (10) mit Spiel aufgenommen sind, wobei die vorstehenden Zähne (25) so konfiguriert sind, dass sie Seitenflächen auf gegenüberliegenden Seiten des anderen Radteils (10) überlappen, um dadurch das äußere Radteil (20) in Bezug auf das innere Radteil (10) in axialer Richtung an seinem Platz zu halten.

2. Elastisches Rad nach Anspruch 1, **dadurch gekennzeichnet, dass** die Zähne (25) in einer Ebene, senkrecht zur Mittelachse (3) des Rades (1, 1', 1") gesehen, V-förmig sind.

3. Elastisches Rad nach Anspruch 2, **dadurch gekennzeichnet, dass** die Ausnehmungen (15) in einer Ebene, senkrecht zur Mittelachse (3) des Rades (1, 1', 1") gesehen, V-förmig sind.

4. Elastisches Rad nach Anspruch 2 oder 3, **dadurch gekennzeichnet, dass** die erste und die zweite Seitenwand (21a, 21b) die Form von gezahnten flachen Ringen haben.

5. Elastisches Rad nach einem der Ansprüche 1-4, **dadurch gekennzeichnet, dass** die erste und zweite Seitenwand (21a, 21b) an dem äußeren Radteil (20) befestigt sind, wobei die vorstehenden Zähne (25) entlang des Innenumfangs der ersten und zweiten Seitenwand (21a, 21b) verteilt sind und in radialer Richtung nach innen vorstehen.

6. Elastisches Rad nach Anspruch 5, **dadurch gekennzeichnet, dass** das äu-ßere Radteil (20) eine Radfelge umfasst, die durch mehrere gekrümmte Radfelgensegmente (27) gebildet ist, die nacheinander entlang des Außenumfangs des äußeren Radteils angeordnet sind, wobei jedes Felgensegment (27) einen nach innen weisenden Befestigungsabschnitt (28) aufweist, der zwischen der ersten und der zweiten Seitenwand (21a, 21b) aufgenommen und an diesen befestigt ist.

7. Elastisches Rad nach Anspruch 6, **dadurch gekennzeichnet, dass** der Befestigungsabschnitt (28) jedes Radfelgensegments (27) an seiner nach innen weisenden Seite einen gekrümmten Rand (30) aufweist, wobei diese gekrümmten Ränder (30) an den Befestigungsabschnitten (28) der Radfelgensegmente (27) zusammen den ringförmigen Rand (24) an dem äußeren Radteil (20) bilden.

8. Elastisches Rad nach Anspruch 6 oder 7, **dadurch gekennzeichnet, dass** der Befestigungsabschnitt (28) jedes Radfelgensegments (27) mit Hilfe von Bolzen (31) an der ersten und zweiten Seitenwand (21a, 21b) befestigt ist.

9. Elastisches Rad nach einem der Ansprüche 1-8, **dadurch gekennzeichnet, dass** das innere Radteil (10) ringförmig oder scheibenförmig ist.

10. Elastisches Rad nach Anspruch 9, **dadurch gekennzeichnet, dass** das innere Radteil (10) ein Basiselement (17) in Form eines flachen Kreisrings oder einer flachen Kreisscheibe umfasst, wobei der Radkörper (11) in der Mitte dieses Basiselements (17) vorgesehen ist und der ringförmige Rand (14) an dem inneren Radteil (10) sich entlang des Außenumfangs des Basiselements (17) erstreckt.

11. Elastisches Rad nach Anspruch 10 in Kombination mit Anspruch 5, **dadurch gekennzeichnet:**
- **dass** ein erster flacher Ring (18a) auf einer ersten Seite des Basiselements (17) befestigt ist, wobei dieser erste flache Ring (18a) mit Zähnen (19) versehen ist, die entlang seines Außenumfangs verteilt sind, und wobei die Ausnehmungen (15) zur Aufnahme der vorstehenden Zähne (25) der ersten Seitenwand (21a) zwischen diesen Zähnen (19) an dem ersten flachen Ring (18a) ausgebildet sind; und
- **dass** ein zweiter flacher Ring (18b) an dem Basiselement (17) auf einer gegenüberliegenden zweiten Seite desselben befestigt ist, wobei dieser zweite flache Ring (18b) mit Zähnen (19) versehen ist, die entlang seines Außenumfangs verteilt sind, und wobei die Ausnehmungen (15) zur Aufnahme der vorstehenden Zähne (25) der zweiten Seitenwand (21b) zwischen diesen Zähnen (19) an dem zweiten flachen Ring (18b) ausgebildet sind.

12. Elastisches Rad nach einem der Ansprüche 1-11, **dadurch gekennzeichnet, dass** die Federelemente (4) stangenförmig sind und in der Umfangsrichtung des ringförmigen Raums (2) hintereinander angeordnet sind, so dass sie einen gebrochenen polygonalen Ring von Federelementen um den ringförmigen Rand (14) an dem inneren Radteil (10) bilden.

13. Elastisches Rad nach einem der Ansprüche 1-12, **dadurch gekennzeichnet, dass** nach außen vorstehende Eingriffselemente (32) in Form von Zähnen entlang des Außenumfangs des äußeren Radteils (20) verteilt sind.

14. Elastisches Rad nach einem der Ansprüche 1-12, **dadurch gekennzeichnet, dass** das äußere Radteil (20) einen glatten Außenumfang aufweist.

15. Drehgestell für ein Fahrzeug, wobei das Drehgestell (40) ein drehbares Antriebsrad (1), ein drehbares Losrad (1") und einen in einer Endlosschleife um das Antriebsrad (1) und das Losrad (1") angeordneten Treibriemen (41) umfasst, **dadurch gekennzeichnet, dass** das Antriebsrad (1) ein Rad nach Anspruch 13 ist und dass das Losrad (1") ein Rad nach Anspruch 14 ist.

## Revendications

1. Roue élastique comprenant :
- une partie de roue intérieure (10), au centre de laquelle est situé un corps de roue (11) ;
- une partie de roue extérieure annulaire (20), qui entoure la partie de roue intérieure (10) ; et
- un ou plusieurs éléments ressorts allongés (4) disposés dans un espace annulaire (2) entre la partie de roue intérieure (10) et la partie de roue extérieure (20), la partie de roue extérieure (20) étant reliée de manière élastique à la partie de roue intérieure (10) par l'intermédiaire du ou des éléments ressorts (4) ; et
- des première et seconde parois latérales (21a, 21b) disposées à l'opposé l'une de l'autre et fixées à la partie de roue intérieure ou extérieure, ledit espace annulaire (2) étant limité dans une première direction axiale par la première paroi latérale (21a) et dans la direction axiale opposée par la seconde paroi latérale (21b), et les première et seconde parois latérales (21a, 21b) étant conçues pour maintenir chaque élément ressort (4) en place dans ledit espace annulaire (2) dans la direction axiale,
**caractérisée en ce que** :
- ledit espace annulaire (2) est limité dans la direction radiale vers l'extérieur par un bord annulaire (24) de la partie de roue extérieure (20) tourné vers l'intérieur et dans la direction radiale vers l'intérieur par un bord annulaire (14) de la partie de roue intérieure (10) tourné vers l'extérieur, le ou chaque élément ressort (4) étant ajusté entre le bord annulaire (24) de la partie de roue extérieure (20) et le bord annulaire (14) de la partie de roue intérieure (10) ; et **en ce que**
- les première et seconde parois latérales (21a, 21b) sont pourvues de dents saillantes (25) qui font saillie dans la direction radiale, depuis la partie de roue (20) sur laquelle les première et seconde parois latérales (21a, 21b) sont fixées vers l'autre partie de roue (10), et sont reçues avec jeu dans des évidements (15) associés dans l'autre partie de roue (10), les dents saillantes (25) étant conçues pour chevaucher des surfaces latérales sur des côtés opposés de l'autre partie de roue (10) pour maintenir ainsi la partie de roue extérieure (20) en place par rapport à la partie de roue intérieure (10) dans la direction axiale.

2. Roue élastique selon la revendication 1, **caractérisée en ce que** lesdites dents (25) sont en forme de V, vues dans un plan perpendiculaire à l'axe central (3) de la roue (1, 1', 1").

3. Roue élastique selon la revendication 2, **caractérisée en ce que** lesdits évidements (15) sont en forme de V, vus dans un plan perpendiculaire à l'axe central (3) de la roue (1, 1', 1").

4. Roue élastique selon la revendication 2 ou 3, **caractérisée en ce que** les première et seconde parois latérales (21a, 21b) ont la forme d'anneaux plats dentés.

5. Roue élastique selon l'une quelconque des revendications 1 à 4, **caractérisée en ce que** les première et seconde parois latérales (21a, 21b) sont fixées à la partie de roue extérieure (20), lesdites dents saillantes (25) étant réparties le long de la périphérie intérieure des première et seconde parois latérales (21a, 21b) et faisant saillie dans la direction radiale vers l'intérieur.

6. Roue élastique selon la revendication 5, **caractérisée en ce que** la partie de roue extérieure (20) comprend une jante de roue formée par plusieurs segments de jante de roue (27) incurvés, qui sont disposés l'un après l'autre le long de la périphérie extérieure de la partie de roue extérieure, chaque segment de jante de roue (27) ayant une partie de montage (28) tournée vers l'intérieur qui est reçue entre et fixée aux première et seconde parois latérales (21a, 21b).

7. Roue élastique selon la revendication 6, **caractérisée en ce que** la partie de montage (28) de chaque segment de jante de roue (27) a un bord incurvé (30) sur son côté tourné vers l'intérieur, ces bords incurvés (30) sur les parties de montage (28) des segments de jante de roue (27) formant ensemble ledit bord annulaire (24) sur la partie de roue extérieure (20).

8. Roue élastique selon la revendication 6 ou 7, **caractérisée en ce que** la partie de montage (28) de chaque segment de jante de roue (27) est fixée aux première et seconde parois latérales (21a, 21b) au moyen de boulons (31) .

9. Roue élastique selon l'une quelconque des revendications 1 à 8, **caractérisée en ce que** la partie de roue intérieure (10) est annulaire ou discoïde.

10. Roue élastique selon la revendication 9, **caractérisée en ce que** la partie de roue intérieure (10) comprend un élément de base (17) sous la forme d'un anneau circulaire plat ou d'un disque circulaire, le corps de roue (11) étant situé au centre de cet élément de base (17) et ledit bord annulaire (14) sur la partie de roue intérieure (10) s'étendant le long de la périphérie extérieure de l'élément de base (17).

11. Roue élastique selon la revendication 10 en combinaison avec la revendication 5, **caractérisée en ce que** :
- un premier anneau plat (18a) est fixé à l'élément de base (17) sur un premier côté de celui-ci, ce premier anneau plat (18a) étant pourvu de dents (19) réparties le long de sa périphérie extérieure, les évidements (15) pour recevoir les dents saillantes (25) de la première paroi latérale (21a) étant formés entre ces dents (19) sur le premier anneau plat (18a) ; et **en ce que**
- un second anneau plat (18b) est fixé à l'élément de base (17) sur un second côté opposé de celui-ci, ce second anneau plat (18b) étant pourvu de dents (19) réparties le long de sa périphérie extérieure, les évidements (15) pour recevoir les dents saillantes (25) de la seconde paroi latérale (21b) étant formés entre ces dents (19) sur le second anneau plat (18b) .

12. Roue élastique selon l'une quelconque des revendications 1 à 11, **caractérisée en ce que** les éléments ressorts (4) sont en forme de tige et disposés les uns après les autres dans la direction circonférentielle de l'espace annulaire (2) de sorte à former un anneau polygonal brisé d'éléments ressorts autour dudit bord annulaire (14) sur la partie de roue intérieure (10).

13. Roue élastique selon l'une quelconque des revendications 1 à 12, **caractérisée en ce que** des éléments de mise en prise (32) faisant saillie vers l'extérieur sous la forme de dents sont répartis le long de la périphérie extérieure de la partie de roue extérieure (20).

14. Roue élastique selon l'une quelconque des revendications 1 à 12, **caractérisée en ce que** la partie de roue extérieure (20) a une périphérie extérieure lisse.

15. Bogie pour véhicule, le bogie (40) comprenant une roue d'entraînement rotative (1), une roue folle rotative (1'') et une courroie de roulement (41) disposée en une boucle sans fin autour de la roue d'entraînement (1) et de la roue folle (1"), **caractérisé en ce que** la roue d'entraînement (1) est une roue selon la revendication 13 et **en ce que** la roue folle (1") est une roue selon la revendication 14.
